# EUROPEAN PATENT SPECIFICATION

(11) **EP 0 211 219 B1**
(45) Date of publication and mention of the grant of the patent: **24.08.1994**
(21) Application number: 86108705.4
(22) Date of filing: 26.06.1986
(51) Int. Cl.: G01N 29/00

(54) **Apparatus for measuring ultrasonic charateristics of a medium**
Vorrichtung zur Messung der akustischen Eigenschaften eines Mediums
Appareil pour mesurer les caractéristiques acoustiques d'un milieu

(30) Priority: 26.06.1985 JP 139521/85
(43) Date of publication of application: 25.02.1987
(73) Proprietor: FUJITSU LIMITED, Kawasaki-shi, Kanagawa 211 (JP)
(72) Inventor: Miwa, Hirohide c/o FUJITSU LIMITED Patent Dept., Nakahara-ku Kawasaki-shi Kanagawa 211 (JP); Murakami, Keiichi c/o FUJITSU LIMITED Patent Dept., Nakahara-ku Kawasaki-shi Kanagawa 211 (JP); Shiba, Akira c/o FUJITSU LIMITED Patent Dept., Nakahara-ku Kawasaki-shi Kanagawa 211 (JP); Shimura, Takaki c/o FUJITSU LIMITED Patent Dept., Nakahara-ku Kawasaki-shi Kanagawa 211 (JP); Hayashi, Hajime c/o FUJITSU LIMITED Patent Dept., Nakahara-ku Kawasaki-shi Kanagawa 211 (JP)
(74) Representative: Sunderland, James Harry

(56) References cited:
- EP-A- 0 064 399
- EP-A- 0 166 182
- US-A- 4 545 250
- IEEE TRANSACTIONS ON BIOMEDICAL ENGINEERING, vol. BME-32, no. 3, March 1985, pages 205-212, IEEE, New York, US; J. OPHIR et al.: "A narrowband pulse-echo technique for In Vivo ultrasonic attenuation estimation"
- ULTRASONIC IMAGING, vol. 5, no. 2, April 1983, pages 117-135, Academic Press; M. FINK et al.: "Ultrasonic signal processing for In Vivo attenuation measurement: Short time fourier analysis"
- IEEE TRANSACTIONS ON ACOUSTICS, SPEECH, AND SIGNAL PROCESSING, vol. ASSP-32, no. 1, February 1984, pages 1-6; R.KUC: "Estimating acoustic attenuation from reflected ultrasound signals: comparison of spectral-shift and spectral-difference approaches"

## Description

The present invention relates to apparatus for measuring acoustic (ultrasonic) characteristic values of a medium by sending ultrasonic pulses into the medium and analysing resultant ultrasonic waves reflected from the medium.

Apparatus for measuring ultrasonic characteristics of a medium may utilize the frequency dependency of attenuation and reflection of ultrasound in the medium. Such dependency is manifest when living body tissue is the measurement medium. Such apparatus may analyse received reflected ultrasonic waves in the frequency domain.

For example, in such apparatus, a reflection signal corresponding to a minute region (3 to 10 mm) between depths z₁ and z₁ + Δz into a measurement medium is extracted, using a time gate, from a series of reflection signals obtained by sending an ultrasonic pulse, with a centre frequency in the range 2 to 10 MHz and a pulse length (duration) of about 1 »s, towards the desired depths from a surface of the measurement medium and by sequentially receiving pulse reflections originating from respective depths in the medium. The reflected signal is analysed as an echo signal to indicate measurement medium (e.g. tissue) characteristic at depth z₁. Depth z (from which a pulse reflection originates) and time t (at which a reflection or echo signal from depth z is received after sending of the pulse generating the reflection or echo signal) are related to the velocity of sound C in the measurement medium, as follows:-$\text{t = 2z/C.}$

An echo signal is converted to provide a power spectrum S(f) in the frequency domain by Fourier transform means such as an FFT (Fast Fourier Transformer).

When many reflectors of ultrasonic waves exist within a small domain in the measurement medium (e.g. in tissue) pulse reflections from respective reflectors are superposed on one another and mutually interfere. Thus, an echo signal may have a continuous complicated waveform and its corresponding spectrum can take a form in which a spectrum |R(f)|², which can be seen as noise having random uneveness, is multiplied with a spectrum S₀(f) corresponding to a reflected wave having unit intensity reflected from one reflector [1].

Herein, a numeral in square brackets [ ] refers to the correspondingly numbered literature reference given at the end of the description.

The random spectrum |R(f)| ² is called a scallop power spectrum and can be described by equation (1).${\text{|R(f)|² = R₀² (1 + δ}}_{\text{(f)}} \text{)}$

R₀² represents a power reflection intensity of the small domain as a whole and δ_{(f)} represents relative fluctuations having random frequency characteristic. The average value δ̅_{(f)} is 0.

Thus, the power spectrum S_{(f)} of an echo signal can be described by equation (2).

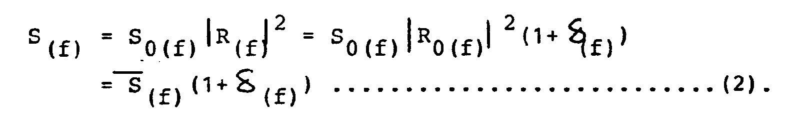

Where, S̅_{(f)} = S_{0(f)}.R₀²_{(f)}

S̅_{(f)} includes factors relating to ultrasound attenuation in both outward and return paths to and from the depth z where the small domain (the object domain) exists and to average reflection characteristic of the object domain. δ_{(f)} contains information about the arrangement of random reflectors within the object domain. For the measurement of characteristic values such as attenuation coefficient and average reflection coefficient, etc., this scallop factor δ_{(f)} becomes an error factor.

In order to eliminate undesired effects of the scallop factor δ_{(f)}, statistical averaging has been employed. For this purpose, power spectrums of k domains in the periphery (adjacent or neighbouring the object domain) which are assumed to have the same properties as the object domain are obtained and a simple additional average is obtained. Thereby, diversion (divergence or deviation) V_{[δ]} of an average value of 1 + δ_{(f)} is reduced by a factor of 1/k by averaging k power spectrums. However, this approach requires the use of about 100 domains (i.e. a value of k of about 100) in order to obtain sufficient accuracy from the point of view of diagnosis in relation to tissue, for example, in a case in which a constant of proportionality to frequency is to be determined from an attenuation coefficient α (in living body tissue, it is known that α = βf:β, the constant of proportionality, is often known as attenuation slope).

Time window width (corresponding to Δz) must be sufficiently longer than pulse length for the spectrum to be correctly obtained. Namely, the time window width should be about 10 »s when pulse length is about 1 »s. This time window width can be converted to a domain length of about 7.5 mm when sound velocity is assumed to be 1500 m/s. The diameter of an ultrasonic beam is 3 to 5 mm in the frequency ranqe mentioned above for use in diagnosis. Therefore, for example, in a case in which k domains (k = m x n, where m domains on a single scanning line are particular interest domains and where there are n scanning lines) are selected from an ultrasonic echo tomographic image and these domains are arranged as a whole in substantially a square region, a square region of about 5 cm x 5 cm size is required to enable useful measurements to be made when k ≒ 100, m ≒ 6∼7, n ≒ 15.

It has been a disadvantage that selection of such a wider domain (e.g. 5cm x 5cm) within a single tissue type is possible only in a large organ such as the liver. Moreover such selection cannot be adopted for use in relation to a minute focal lesion such as a tumor or the initial stage of a cancer even in the liver. It has been adopted for use only in relation to diffusive lesions such as cirrhosis and fattiness.

Various attempts have been made to reduce the size of the region required to obtain useful measurements, namely to enhance space resolution, by suppressing as far as possible the random variable (scallop factor)δ_{(f)} and by reducing as far as possible the number of samples k required for statistical averaging, by approaches based on other than spatial statistical averaging. These attempts will be explained below.

A first approach involves use of a homo molfic (homomorphic) filter [2]. A logarithmic version ℓnS_{(f)} (a common logarithm or dB version may also be allowed) of power spectrum S_{(f)} is obtained and then Fourier-transformed into a cepstrum. The cepstrum is then subject to desired processings, such as the application of a low-pass window, moving average, and smoothing by median filter (described later). The processed cepstrum is reverse Fourier-transformed into a logarithmic power spectrum ℓnS_{p(f)}, and moreover a power spectrum S_{p(f)} is obtained, after the processing, by obtaining reverse logarithms, and attenuation coefficient is obtained from S_{p(f)}. In S_{p(f)},δ_{(f)} is suppressed in comparison with S_{(f)}. Literature reference [2] discloses processing on the cepstrum but the processing on the logarithmic power spectrum and also discloses almost linear processings, although partly including nonlinear processings. In actuality, low-pass window processing is effective in this approach but other methods are not effective.

The second approach assumes and adopts a model spectrum for the logarithmic spectrum ℓnS_{(f)}. For example, using a model based on assumptions that the attenuation coefficient α = βf,β is constant between depth z₁ and depth z₂, namely over a range D = z₂ - z₁, and dependency on frequency of reflection coefficients at depths z₁, z₂ is equal, the following relationship can be obtained [3]. 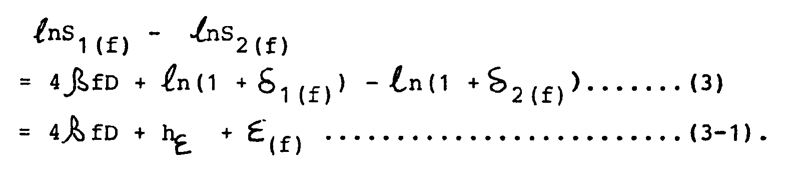
Where S_{1(f)} and S_{2(f)} are power spectrums relating to depths z₁ and z₂ respectively, δ_{1(f)} corresponds to the random variable (scallop factor) of equation (1) at depth z₁ and δ_{2(f)} corresponds to that factor at depth z₂.

The left side of equation (3) corresponds to actually measured values. The first item on the right side is a frequency spectrum modelled as a linear function of frequency while the second and third items on the right side are random variables which become, in equation (3-1), the random variables ε_{(f)} in average value 0 concerning a particular average value h and the frequency which changes around such average value.

In this case, a linear function pf + q is fitted, as the frequency function, to the actually measured values on the left side of equation (3), by the least mean square error method, and a value β is obtained from the slope p. This is called the spectrum difference method [4].

Moreover, with a Gaussian distribution assumed for the spectrum of the ultrasonic signal (pulse) transmitted into the measurement medium, in addition to the modelling of the attenuation coefficient α as a linear function of frequency α = βf, and the assumption that dependencies on frequency of reflection coefficients at z₁ and z₂ are equal, S_{1(f)} and S_{2(f)} may be taken to have Gaussian distributions with respective centre frequencies f₀₁, f₀₂, and with equal spectrum divergences (namely standard deviations σ). A relationship between the two centre frequencies can then be expressed by equation (4). β can be obtained from equation (4). This is called the centre frequency transition method [4].$\text{f₀₁ - f₀₂ = 4σ² β D}$

f₀₁ and f₀₂ can be determined respectively from the 0th moment and primary moment of the spectrums S_{1(f)}, S_{2(f)} and the method of obtaining β from f₀₁, f₀₂ thus obtained is called the moment method.

The logarithm of equation (2) can be obtained as equation (5) and then factor (1 + δ_{(f)}) is not a multiplication factor but is an addition factor as indicated below.${\text{ℓnS}}_{\text{(f)}} \text{= ℓn} {\overline{\text{S}}}_{\text{(f)}} {\text{+ ℓn(1+δ}}_{\text{(f)}} \text{) = ℓn} {\overline{\text{S}}}_{\text{(f)}} \text{+ n(f)}$${\text{n}}_{\text{(f)}} {\text{= ℓn(1 + δ}}_{\text{(f)}} \text{)}$

n(f) namely ℓn(1 + δ_{(f)}) is a random variable, an average value becomes a constant value hₙ and n(f) becomes a random variable fluctuating around the average value [3]. When S̅_{(f)} has a Gaussian distribution, ℓnS̅_{(f)} becomes a parabolic equation in f and the parabolic equation pf² + qf + r can be fitted to the actually measured values on the left side of equation (5) by the least mean square error method, because n_{(f)} becomes uniform additional random variables for the frequency. The centre frequency f₀ of the Gaussian distribution and frequency standard deviation σ can be obtained from coefficients p and q.$\text{2σ² = -1/p, f₀ = -q/2p}$

A value of β can be obtained by substituting f₀ from equation (6) into equation (4). This method is called the parabola application method [5].

In a model assuming a Gaussian spectrum and frequency linearity of attenuation coefficient, the frequency standard deviation σ becomes a constant value as explained above. R. Kuc has announced a method in which parabolas (-1/2σ²)f² + (2f₀/2σ²)f + r, (σ² : constant) having a constant coefficient of f² are formed for various values of f₀, and these parabolas are correlated with the left side of equation (5) and a value of β is obtained by taking as centre frequency f₀ the value of f₀ which maximises the correlation [4]. This method is called the Correlation method or matched-filter method.

The various methods described above will now be compared. In the spectrum difference method in the logarithm spectrum region, the parabola application method and the matched filter method, a model spectrum not including random variables is adopted (fitted) to a spectrum including random variables by using linear processing.

The inventors of the present invention have investigated with computer simulation the influence of scalloping on the (measured) value of β by applying the spectrum difference method and the parabola application method to a pseudo echo signal generated from a line of random reflectors. The inventors have confirmed that there is no particular difference between these methods.

R. Kuc has also investigated the effect of errors in measured values of β due to scalloping in the same way as above for a simple moment method where a value is extracted directly from a moment of a power spectrum in a true value region, the matched filter (correlation) method, the Zero-Cross-Density method (which is a method involving time region processing).

The inventors of the present invention have also attempted an approach involving smoothing the logarithm spectrum by executing a moving average process, then adopting (fitting) the model spectrum to the smoothed spectrum without returning the spectrum to the true value spectrum. They have determined that the result achieved is almost the same as that achieved with the direct adoption (fitting) of model spectrum to the logarithm spectrum when the moving average process is not executed.

It is clear that the spectrum difference method, the parabola application method and the matched filter method on the logarithm spectrum are the best methods and these three methods give the same accuracy in measured values of β.

R. Kuc has indicated that spatial averaging is still necessary even when measuring with the best methods mentioned above, and that ultrasonic apparatus for diagnosis which can be used practically has a limit of theoretical spatial resolution of 2 cm x 2 cm [5].

However, for diagnostic apparatus, such resolution (2 cm x 2 cm) is still insufficient. For example, a resolution of 1 cm x 1 cm or better is necessary for judging whether a tumor is malignant or innocent (benign). This is because when a cancer having a 1 cm dimension, or greater, is found, it has often already transferred also to other regions.

As explained above, the previously proposed approaches to the measurement of ultrasonic characteristics of a medium have the disadvantage that they give insufficient spatial resolution. Moreover, statistical averaging involves longer measurement times and is inferior in practical use.

Ultrasonic Imaging, Vol. 5, No. 2, April 1983, pages 117 to 135, in an article by Fink et al, discloses a centre frequency transition method and discloses an experimental setup, operable to send ultrasonic pulses into a medium and to measure the characteristic of the medium by analysing ultrasonic waves reflected from the medium. The setup comprises a digital time-gain-compensation system and, as spectrum derivation means operable to derive a frequency spectrum from the reflection signal, an A/D converter, a buffer memory and two computers.

According to the present invention there is provided an apparatus for measuring an ultrasonic characteristic of a medium, comprising:-
means operable to send ultrasonic pulses into the medium, to receive ultrasonic waves reflected from the medium and to provide signals representing the received reflected waves;
gate means operable to extract those signals corresponding to reflected ultrasonic waves originating from a particular depth in the medium;
means operable to obtain a logarithmic power spectrum from the Fourier-transformed signal corresponding to the predetermined depth;
processing means operable to process a logarithmic power spectrum;
modelling means operable to fit a model spectrum curve, dependent upon selected parameters, to the output of the processing means to obtain values of said parameters; and
extracting means operable to extract a value of the ultrasonic characteristic from said values provided for two different depths by the modelling means;
characterised in that:-
the processing in the processing means consists exclusively of filtering the logarithmic power spectrum with a moving-window non-linear filtering process such that the original waveform of the logarithmic power spectrum subjected to the filtering process is maintained in areas where changes are gradual whilst changes are reduced, or are suppressed and not used for further evaluation, in areas of the original waveform where changes are sharp, the so filtered logarithmic power spectrum constituting the output of said processing means.

According to the present invention there is also provided apparatus for measuring an ultrasonic characteristic of a medium, comprising:-
means operable to send ultrasonic pulses into the medium, to receive ultrasonic waves reflected from the medium and to provide signals representing the received reflected waves;
gate means operable to extract those signals corresponding to reflected ultrasonic waves originating from a particular depth in the medium;
means operable to obtain a logarithmic power spectrum from the Fourier-transformed signal corresponding to the predetermined depth;
means operable to provide a difference between two so-obtained logarithmic power spectra of different depths, as a difference spectrum;
processing means operable to process a so-obtained difference spectrum;
modelling means operable to fit a model spectrum curve, dependent upon selected parameters, to the output of the processing means to obtain values of said parameters; and
extracting means operable to extract a value of the ultrasonic characteristic from said values provided by the modelling means;
characterised in that:-
the processing in the processing means consists exclusively of filtering the difference spectrum with a moving-window non-linear filtering process such that the original waveform of the difference spectrum, which is subjected to the filtering process, is maintained in areas where changes are gradual whilst changes are reduced, or are suppressed and not used for further evaluation, in areas of the original waveform where changes are sharp, the so filtered difference spectrum constituting the output of the processing means.

According to the present invention there is further provided an apparatus for measuring an ultrasonic characteristic of a medium, comprising:-
means operable to send ultrasonic pulses into the medium, to receive ultrasonic waves reflected from the medium and to provide signals representing the received reflected waves;
gate means operable to extract those signals corresponding to reflected ultrasonic waves originating from a particular depth in the medium;
means operable to obtain a logarithmic power spectrum from the Fourier-transformed signal corresponding to the predetermined depth;
processing means operable to process a logarithmic power spectrum;
modelling means operable to fit a model spectrum curve, dependent upon selected parameters, to the output of the processing means to obtain values of said parameters; and
extracting means operable to extract a value of the ultrasonic characteristic from said values provided for two different depths by the modelling means;
characterised in that:-
the processing means comprise exclusively:-
means operable to provide a difference between the so obtained logarithmic power spectrum and a preliminarily fitted model curve;
filter means, whereby the filtering process consists exclusively of a moving-window non-linear filtering process such that the original waveform of the difference between the logarithmic power spectrum and the preliminarily fitted curve, which difference is subjected to the filtering process, is maintained in areas where changes are gradual whilst changes are reduced, or are suppressed and not used for further evaluation, in areas of the original waveform where changes are sharp; and
means for adding said difference to the preliminarily fitted curve, to provide a sum spectrum, which constitutes the output of the processing means.

According to the present invention there is also provided an apparatus for measuring an ultrasonic characteristic of a medium, comprising:-
means operable to send ultrasonic pulses into the medium, to receive ultrasonic waves reflected from the medium and to provide signals representing the received reflected waves;
gate means operable to extract those signals corresponding to reflected ultrasonic waves originating from a particular depth in the medium;
means operable to obtain a logarithmic power spectrum from the Fourier-transformed signal corresponding to the predetermined depth;
means operable to provide a difference between two so-obtained logarithmic power spectra of different depths, as a difference spectrum;
processing means operable to process a so-obtained difference spectrum;
modelling means operable to fit a model spectrum curve, dependent upon selected parameters, to the output of the processing means to obtain values of said parameters; and
extracting means operable to extract a value of the ultrasonic characteristic from said values provided by the modelling means;
characterised in that:-
the processing means comprises exclusively:-
means operable to provide a difference between the so obtained difference spectrum and a preliminarily fitted model;
filter means, whereby the filtering process consists exclusively of a moving-window non-linear filtering process such that the original waveform of the difference between the difference spectrum and the preliminarily fitted curve, which difference is subjected to the filtering process, is maintained in areas where changes are gradual whilst changes are reduced, or are suppressed and not used for further evaluation, in areas of the original waveform where changes are sharp; and
means for adding said difference to the preliminarily fitted curve, to provide a sum spectrum, which constitutes the output of the processing means.

The present invention can mitigate disadvantages of the previous proposals.

An embodiment of the present invention can provide ultrasonic apparatus for measuring a characteristic of a medium in which error in the measured medium characteristic value due to spectrum scalloping is reduced and in which the number of space average samples required is reduced. Spatial resolution is improved through the employment of a model spectrum and an approach which involves nonlinear processing to obtain medium characteristic values.

An embodiment of the present invention employs a model spectrum obtained by modelling a medium characteristic to the measured power spectrum of an echo signal from a particular medium region, extracts a medium characteristic value and adopts application processing including nonlinear processings, thereby extracts characteristic values with higher accuracy, exceeding the limit of adoption by linear processing, reduces the required number of space average samples and measures space distribution of said characteristic value with high space resolution.

The present invention provides for the extraction of a medium characteristic value by more nearly eliminating the effect of spectrum scalloping, resulting from the presence of random reflectors in the measurement medium, in a logarithmic value spectrum of a reflected signal from a measurement region of the medium.

Reference is made, by way of example, to the accompanying drawings, in which:-
- Fig. 1: is a schematic block diagram illustrating a measuring apparatus embodying the present invention;
- Figs. 2A and 2B: are graphical representations of spectra, for assistance in explaining a spectrum difference method;
- Figs. 3A to 3C: are graphical representations of spectra, for assistance in explaining a parabola application method;
- Figs. 4A and 4B: are graphs for assistance in explaining nonlinear filter processing;
- Fig. 5: is a graph for assistance in explaining median filter processing;
- Fig. 6: is a flowchart for assistance in explaining processing carried out in the apparatus of Fig. 1; and
- Figs. 7A, 7B, 8A and 8B: are plots of results of computer simulation, for assistance in explaining the effect of an embodiment of the present invention.

Embodiments of the present invention which are intended primarily to provide for measurement of ultrasound attenuation coefficient slope of living tissue will be described below.

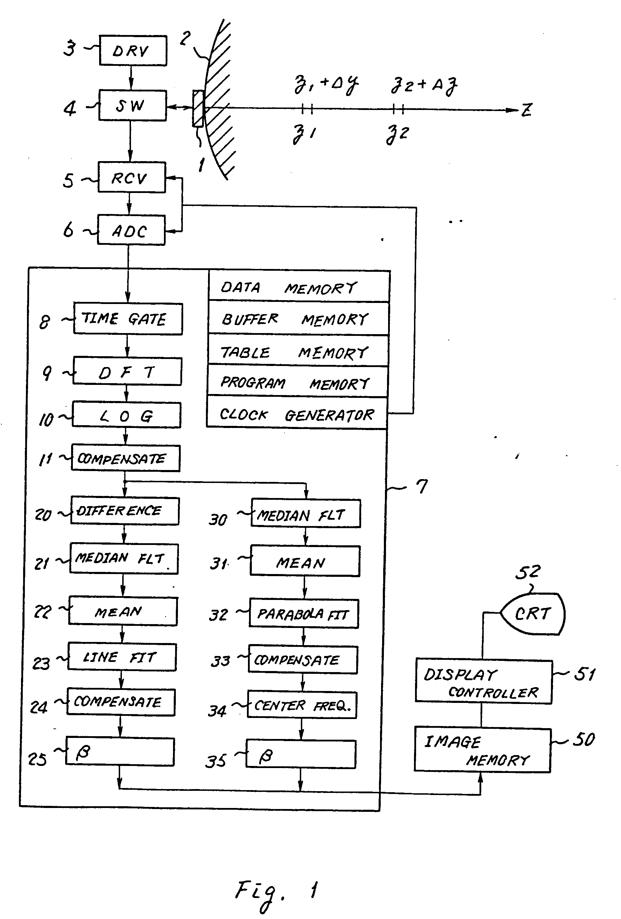

The schematic block diagram of Fig. 1 illustrates an embodiment of the present invention which employs, for nonlinear application processing, means combining a moving window median filter method (nonlinear processing) on a log power spectrum and a succeeding least mean square method (linear processing).

In Fig. 1, 1 is an ultrasonic transducer operable to send an ultrasonic pulse in a direction z from the surface of a measurement medium 2, such as a living body, into the medium 2, using a driver 3. The transmitted pulse travels in the direction z within the medium. Reflected waves are generated at various points in the medium 2, e.g. in the living body tissue. The reflected waves travel in the reverse of the direction z and echoes (reflected waves) from shallower regions in the medium 2 return quickly to the transducer 1 while echoes from deeper regions return after greater delay to the transducer 1. The echoes are all received by the transducer 1. In tissue, reflectors exist close together and almost continuously, and the received echo signals become a continuous signal with the pulse transmission time taken as the time origin (t = 0) for the signal. Echoes corresponding to depths z₁ to z₁ + Δz into the medium are reflected waves received between times t₁ = (2z₁/c) to (2z₁/C + T). (T = 2Δz/c, c: sound velocity). 4 is a switching circuit which switches between signal paths for transmission and reception. 5 is an amplifier for received (echo) signals.

6 is an A/D converter which converts an amplified received signal in analog form to a digital signal and sends the digital signal to a control and operation unit 7. This control and operation unit 7 can be formed using a microcomputer, etc. This unit is mainly composed of a data memory, a buffer memory, a table memory, an arithmetic operation circuit (not mentioned in Fig. 1), a clock generator, a control program memory and an arithmetic operation program memory (not mentioned in Fig. 1), etc. These memories may be constituted by respective memory regions within a single memory. Output data from AD converter 6 concerning a single pulse sending and receiving cycle is stored in the data memory of the unit 7.

Reference numbers 8 to 11, 20 to 25 and 30 to 35 relate to schematically illustrated steps (i.e. a schematic flowchart) of arithmetic operation processing performed in the unit 7.

The arithmetic operation processing steps fall into three series: Series 8 (i.e. steps 8 to 11), Series 20 (i.e. steps 20 to 25), and Series 30 (i.e. steps 30 to 35).

In Series 8, step 8 in Fig. 1 concerns time window gate processing. A train of data corresponding to a period between a time t corresponding to a depth z of interest and a time t+T corresponding to a depth z+Δz is extracted from the data memory and stored in the buffer memory by this time window gate processing. Step 9 concerns discrete Fourier transform processing. The processing can be completely accomplished with software but can alternatively be accomplished by hardware connected with a microcomputer, in order to curtail processing time. The train of data, extracted through the time window, in the buffer memory is Fourier-transformed and thereby a power spectrum as a function of frequency can be obtained.

Step 10 concerns conversion of the power spectrum to logarithmic form, wherein the power spectrum is converted to a logarithm power spectrum using a true value - logarithm conversion table stored in the table memory.

Step 11 is concerned with compensation in which socalled geometrical factor compensation (for compensating spectrum distortion due to nonuniformity of three dimensional diffraction effects on an ultrasonic beam corresponding to depth in the direction of travel direction of the ultrasonic beam) and Gaussian compensation (effected when the actual spectrum has a non-Gaussian distribution in a case in which a Gaussian distribution spectrum is necessary as is the case for steps 30 to 35 in Fig. 1 - see below) are carried out. Compensating coefficients are respectively given as functions of frequency for given depths and can be obtained in advance by actual measurements (in a non-attenuative medium). Such compensating coefficients are stored in advance in the table memory and compensation is carried out by reading the compensating coefficients corresponding to the depth z [7], [8].

The arithmetic operation processing of Series 20 in Fig. 1 uses a model spectrum based on the transmission pulse spectrum shape, and is based on the spectrum difference method with the assumption that the attenuation coefficient α of the measurement medium (e.g. tissue) can be expressed as a linear function of frequency, namely as α = βf(β is a constant of proportionality), and the dependency on frequency of reflection coefficient is uniform with respect to depth into the medium.

The arithmetic operation processing of Series 30 is based on the parabola application method of centre frequency transition method usina a send pulse spectrum of Gaussian distribution.

In apparatus embodying the present invention, either one of the Series 20 and 30 may be employed . It is not necessary to use two systems (both series) simultaneously as shown in Fig. 1.

Signal processing in the steps of Series 20 (i.e. steps 20 to 25) will now be explained.

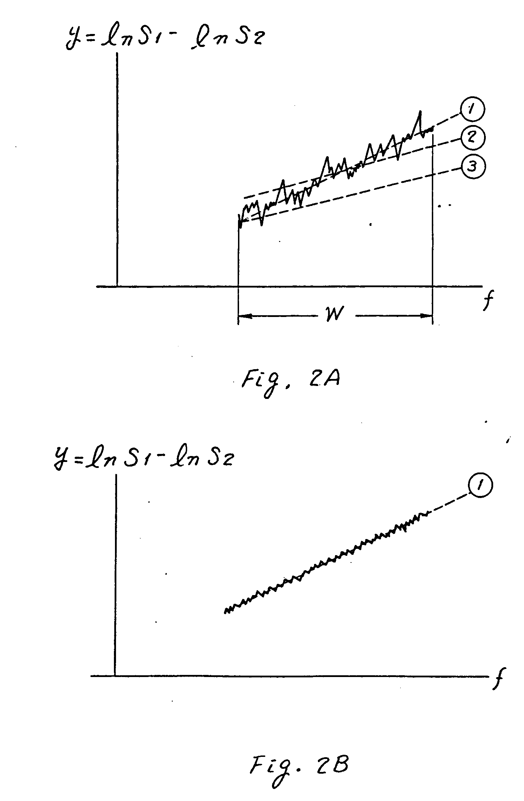

Step 20 involves a subtraction (linear processing) between the compensated log power spectrum ℓnS_{1(f)} corresponding to depth z₁ which is produced after step 11 and ℓnS_{2(f)} corresponding to depth z₂ which is deeper by a distance D. This operation corresponds to the equations (3) and (3-1) explained above. This actually measured value, namely the left side of the equation (3) can be indicated as shown in Fig. 2A, which is a graph of y = ℓnS_{1(f)} - ℓnS_{2(f)} against frequency f. The spectrum (or spectrum difference) shown in Fig. 2A changes at random substantially around a straight line ① in an effective signal band W of the sending and receiving apparatus.

In a previous proposal, a model spectrum of form pf + q is adopted (fitted) in the range W to the spectrum of Fig. 2A using the Least Mean Square Error Method (LMSE method) and a value of β obtained from the relationship β = p/4D. However, β (namely p) obtained as explained above is influenced by the random variable ε_{(f)} and therefore desired accuracy cannot be obtained for β.

This is because the data which Fig. 2A represents does not include a sufficient number of samples mutually independent of each other. Usually, the time gate width T is set to about 10 »s. In this case, frequency resolution Δf(1/T) becomes 0.1 MHz. Since W is determined as about 2 MHz in the current technique, the number of independent samples (fᵢ) becomes equal to about W/Δf = 20. Therefore, the probability that the average ε_{(fi)} of 20 independent samples of ε becomes zero is not sufficiently high, frequency distribution is not symmetrical for positive and negative and frequency distributions in the respective half-band sections W/2 on the right and left of the signal band W are not equal. Thereby, error is introduced into p. It is possible to increase the number of independent samples only by spatial averaging, which degrades spatial resolution.

Steps of Series 20 of this embodiment of the present invention execute moving window median filter processing (step 21), which is nonlinear processing, and then applies (fits) the model spectrum pf+q
using the LMSE method (step 23) after smoothing. The smoothing effect is illustrated in the graph of Fig. 2B which plots y = ℓnS_{1(f)} - ℓnS_{2(f)}, after smoothing, against frequency. The median filter eliminates excessively separated sampling points and recovers positive and negative symmetry of frequency distribution of ε_{(fi)} and also reduces the diffraction effect.

Particularly in relation to the LMSE method, excessively separated sampling points have a great influence on p (related to the square of the separation distance between the points), but the median filter eliminates such excessively separated sampling points and increases the accuracy of p. Therefore, a number of space averaging samples required (step 22) k can be reduced and space resolution can be increased.

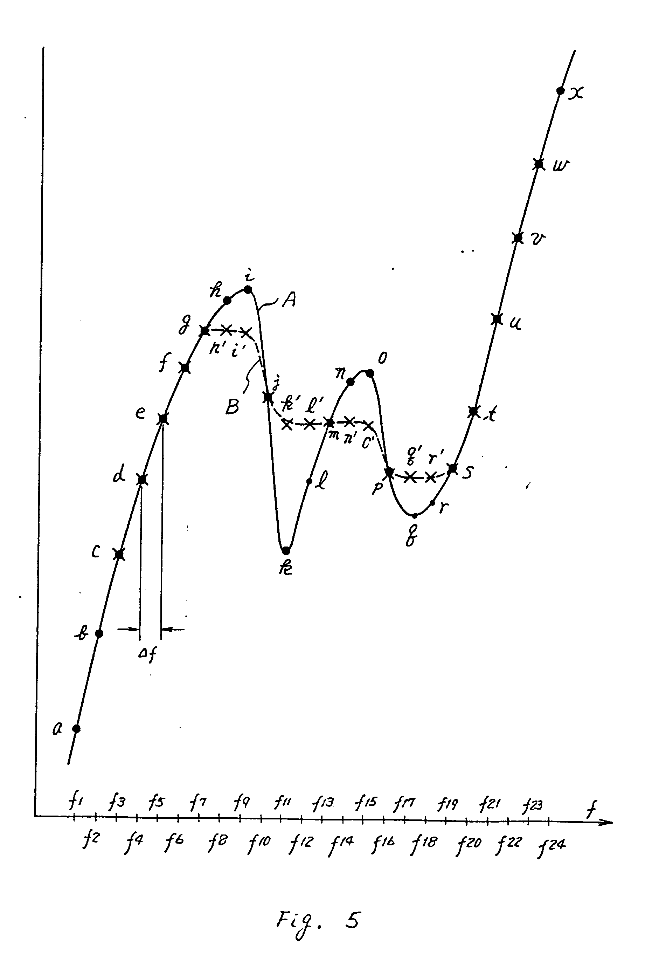

Fig. 5 is a graph for assistance in explaining median filter processing. In this graph, frequency is plotted on the horizontal axis while measured values obtained when a waveform A is sampled at uniform frequency intervals are plotted on the vertical axis.

Median filter processing means processing wherein an odd number of continuous (consecutive) sampled values (values relating to consecutive frequency intervals) are arranged in sequence from the largest value to the smallest and the middle value of the thus arranged sequence is utilised as the sampling value applicable to the central one of the consecutive frequency intervals. That is, the actual sampled value for the central frequency interval is replaced by the middle value of the arranged sequence.

For example, when five sampling values a to e are considered in Fig. 5, the middle one of those five values, when arranged sequentially, from the largest to the smallest, namely the third value, is employed as the sampling value applying to the central sampling frequency f₃ of five sampling frequencies to which the values a to e relate. In the case of values a to e, the middle sized value is c and this is the actual sampling value applying to frequency f₃, so median filtering has no effect. Generally, when the waveform A increases or decreases monotonically (over the odd number of consecutive sampled values) the result of medium filtering does not cause a change of waveform.

However, in the case of median filtering, for example, in relation to sampling point f₈ in Fig. 5, the (consecutive) sampling values f to j can be arranged sequentially, from the largest downwards, as i, h, g, f, j. Since the centre value is g, this value becomes value h′ (which replaces value h) after the filter processing in respect of point f₈. Again, in the case of median filter processing in relation to the point f₉, sampling values g to k can be arranged, in like fashion, as i, h, g, j, k. The centre value is again g. Therefore, the sampling value at f₉ after processing becomes i′ (which replaces value i) which is equal to the value g. The values resulting from median processing are indicated by Xs in Fig. 5. A waveform B, partly indicated by a broken line can be obtained by connecting such values X. As is clear from Fig. 5, peak values are suppressed and the waveform is smoothed as a result of median filtering.

The more the sampled values exist for the reference at a time, the more distinctively suppression occurs. A degree of suppression can be obtained or determined in accordance with experiment or simulation.

In practice, median filter processing may be applied directly to the data point group represented by the graph of Fig. 2A, as a step (21-1), or may be applied as part of a substep group, relating to a step (21-2), using a different method. For example, it is possible that as a substep 1, the LMSE method is applied in order to obtain p′f + q′. Then, as a substep 2, values obtained from p′f + q′ are subtracted from each point in Fig. 2A. And then, median filter processing is applied, as a substep 3, to the resulting differences obtained by the subtraction and thereafter, as a sub-step 4, p′f + q′ is added back to the result of median filter processing.

The spatial averaging step 22 involves linear processing and this step may be inserted at any position in relation to the other steps of series 20. When the steps are divided into different groups or sections, separated by a nonlinear processing step, no alteration of result occurs when the position of the spatial averaging step is moved within one section, but if that step is moved to a different section this may alter the accuracy which can be achieved. The optimum section for insertion of the spatial averaging step should be determined by experiment, etc. Within a section, the position at which the spatial averaging step is inserted is generally chosen so that the total amount of calculation is minimized and the processing time becomes shortest. Fig. 1 merely illustrates an example.

Step 24 is a distortion compensating step involving nonlinear processing. The filter step 21 suppresses random variables ε_{(f)} on the right side of equation (3-1) but simultaneously may cause deviation of the model spectrum in relation to the first term on the right side of the equation (3-1). In a case in which the model spectrum is linear, median filter processing does not generate any such distortion in either a step (21-1) or a step (21-2) as described above and the compensating step 24 can be omitted. Step 24 is, however, indicated in order to maintain generality of description. An example of distortion such as may be compensated in step 24 is explained below in relation to series 30.

A case in which steps of series 30 (i.e. steps 30 to 35) are used is explained hereunder. In this case, a Gaussian distribution type (σ² is known) transmission pulse spectrum is used and a value of β is obtained from the center frequency transition of equation (4) and the parabola application method is used for measurement of centre frequency. The median filter processing of step 30 is immediately carried out for the compensated logarithm power spectrum which is provided from step 11.

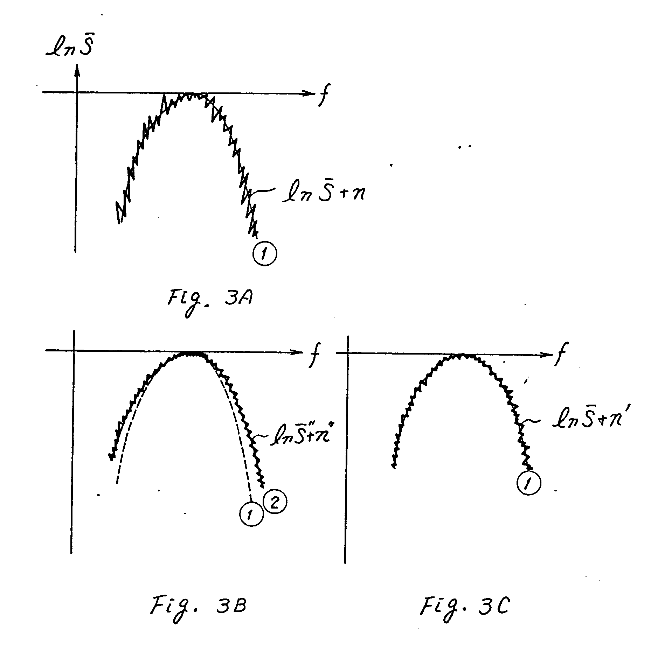

As shown in the graph of Fig. 3A, in which compensated logarithm power spectrum ℓnS̅_{(f)} is plotted against frequency, in the output of step 11, random variables n_{(f)} are superposed on parabola ℓnS̅_{(f)} (① in the figure). The step 30 is capable of employing, in practice, a method of direct processing, as a step (30-1), as in the case of step Series 20, and a method in which p′f² + q′f + r′ is obtained first by employing the LMSE method as a step (30-2), then p′f² + q′f + r′ is subtracted from each point in Fig. 3A, and then median filter processing is executed in relation to the result of such subtraction and then p′f² + q′f + r′ is added back again. In a step (30-2) as outlined, since median filter processing is executed after removing the parabola components from Fig. 3A, the model spectrum suffers little distortion. Accordingly, the suppressed random variables n′_{(f)} are superposed on the parabola ℓnS(① in the figure), which is the model spectrum, as shown in Fig. 3C. Using a step (30-1), median filter processing is executed while the parabola component of Fig. 3A is still present and therefore the model spectrum suffers partial distortion and thereby the random variables n˝_{(f)} which are a little suppressed are superposed on a distorted parabola ℓnS̅˝ as shown in Fig. 3B ②. The parabola ℓnS̅˝ is equivalent to a parabola obtained by executing median filter processing of ℓnS̅. The peak region of the parabola is suppressed. Then the peak region is normalized to the same level again, and the width appears to be widened.

Thus, the nonlinear distortion compensation processing (step 33) can be omitted so far as a step (30-2) is concerned but may be required for a step (30-1). As shown in ② of Fig. 3B, the maximum value position (centre frequency) of the parabola does not suffer distortion but the diffraction effect of the parabola (corresponding to σ in Gaussian spectrum) is wide-spreading. In Fig. 3B, the distortion-free model spectrum ① is indicated by a broken line. Therefore, in a case in which a step (30-1) is employed, filter distortion compensation in step 33 is unnecessary when centre frequency is the only significant parameter from the model spectrum which is required, but compensation is necessary in a case [1] in which it is required to extract the divergence σ² of Gaussian distribution from the model spectrum as another parameter, considering a model spectrum in higher order.

Examples of methods for compensating distortion of the model spectrum in a case in which extraction of divergence σ is required are explained below.

In a first example, processings of step (30-1) are executed in advance for various parabolas yⱼ = pⱼf² + qⱼf + rⱼ (ideal parabolas suffering no partial distortion due to ε_{(f)}) in order to obtain y$\frac{\text{^}}{\text{j}}$_{(f)} distorted by median processing, and values of y$\frac{\text{^}}{\text{j}}$ corresponding to pairs pⱼ, qⱼ are obtained in advance. y$\frac{\text{^}}{\text{j}}$ is applied in place of yⱼ in step 32, and pⱼ, qⱼ corresponding to the y$\frac{\text{^}}{\text{j}}$ of optimum application (optimum fit) are obtained from the known-in-advance correspondence.

In a second example, a distortion index of the distorted model spectrum of ② of Fig. 3B is specified, and correspondences between distortion index values and values pi, qi are obtained in advance for various yⱼ. In ② of Fig. 3B, the centre frequency does not change: only the diffraction effect changes. Therefore, only one distortion index need be used for all yⱼ. For example, to provide the distortion index, the model spectrum curve yⱼ ② of Fig. 3B may be extracted over the range from its maximum value to, for example, a value of 40 dB or less, and a ratio v$\frac{\text{^}}{\text{j}}$ of second order moment and 0th order moment around the centre frequency is obtained to specify the shape. This ratio can be used as the distortion index. Since a correspondence of 1:1 exists between v$\frac{\text{^}}{\text{j}}$ and pⱼ, qⱼ, v$\frac{\text{^}}{\text{j}}$ can be provided from an output of step 30 and pⱼ, qⱼ can also be obtained therefrom.

A third example is a simpler method. Under the assumption that y$\frac{\text{^}}{\text{j}}$ is also parabola,
y$\frac{\text{^}}{\text{j}}$ = p$\frac{\text{^}}{\text{j}}$f² + q$\frac{\text{^}}{\text{j}}$f + r$\frac{\text{^}}{\text{j}}$ can be obtained and when the relationship between p$\frac{\text{^}}{\text{j}}$, q$\frac{\text{^}}{\text{j}}$ and pⱼ, qⱼ for yⱼ in relation to which the processing of step 30 is executed, for various yⱼ, is obtained in advance, pⱼ, qⱼ can be obtained from correspondence considering the output p, q of step 32 as pⱼ, qⱼ.

From pⱼ, qⱼ thus obtained, the centre frequency f₀ and divergence σ² of the spectrum can be obtained using equation (6). This is step 34. In step 35, β is further obtained by employing equation (4).

Step 31 relates to spatial averaging and the explanation given in respect of step 22 of series 20 applies also to step 31.

As explained above, a value of β between depths z₁ and z₂ can be obtained and distribution of β can also be detected for all depths z in a similar way. Setting of D = Δ z is generally used for obtaining a detailed distribution of β. Moreover, distribution of β can be obtained as a function of z for a number of scanning lines and thus a bidimensional distribution of β over a particular section can be obtained by repeating this process. The data thus obtained is stored in an image memory 50. 51 is a display controller which reads the contents of image memory, for example, in a sequence in accordance with raster scanning of a television and displays a distribution of β on the CRT 52 in terms of brightness or pseudo-colours.

Linear processings such as depth direction differencing as in step 20, spatial averaging as in step 22 (or 31), average processing using a moving window on the frequency axis, and low-pass-filter processing can be inserted between step 10 and step 21 (or step 30).

It is of course possible to convert the output of step 30 or 31 from logarithm values to true values, the moment of each order of a Gaussian distribution spectrum can be obtained, average frequency and divergence of the spectrum can also be obtained, and from these latter quantities attenuation slope can be obtained by respectively approximating them as centre frequency and divergence around the centre frequency.

The difference between the output of step 11 and the model spectrum after compensating for filter distortion gives n_{(f)} - n̅_{(f)}: see equation (5). From equation (5-1),${\text{n}}_{\text{(f)}} {\text{= ℓn(1 + δ}}_{\text{(f)}} \text{)}$
hn : constant, hn = ℓ̅n̅(̅1̅ +̅ δ̅_̅{̅(̅f̅)̅}̅)̅ = constant
From equation (1),
n_{(f)} = ℓn(|R_{(f)}|²/R₀²). Namely, data relating to the scallop power spectrum |R(f)|² can be obtained from n_{(f)} and moreover a histogram representing intervals between reflectors in the medium, a self-correlation function of reflector intensity distribution, information concerning the existence or non-existence of quasi-periodic structures and medium characteristic values of such periodic structures, etc., can be obtained for use in diagnosis.

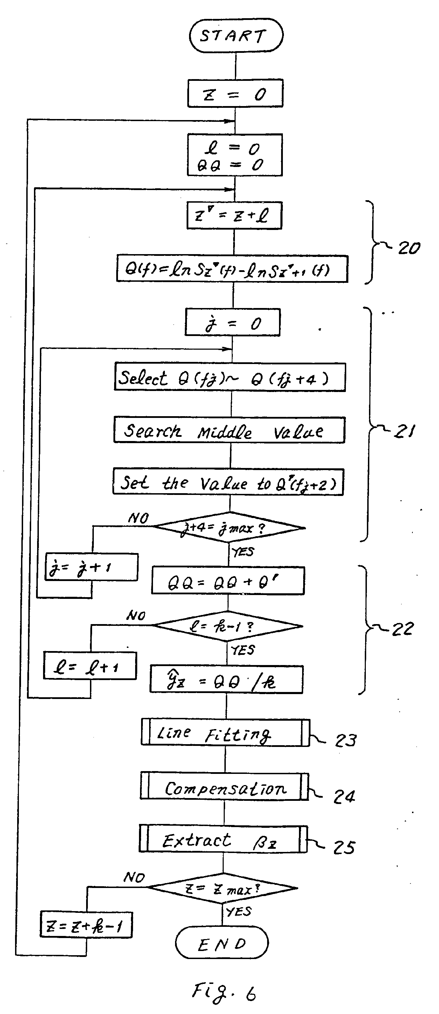

The flowchart of Fig. 6, which represents in detail steps 20 to 25 indicated for the apparatus of Fig. 1 will be explained.

As a preliminary step, log power spectrums at respective depths z (z = 0 ∼ zₘₐₓ) are stored in data memory by steps 8 to 11 as indicated in Fig. 1.

Moreover, as the log power spectrums, spectrum values at each frequency fⱼ (j = 0 ∼ jₘₐₓ) are stored.

First, z, ℓ, QQ are all cleared to zero. Here, z is depth, and ℓ is the order or number (sequence) of k sampling points (domains) used for obtaining a spatial average in the depth direction and ℓₘₐₓ should be considered as k-1. QQ refers to a buffer region, or the content of that buffer region, for accumulating k sample values to obtain an average value.

Here, z+ℓ is set at z′, data relating to log power spectrums at depths z′ and z′+1 are read from data memory, differences between the spectrums are calculated for each frequency fⱼ and the results then stored in buffer regions Q(f). The stored results Q(f) correspond to the waveform of Fig. 2A.

Five data values fⱼ to fⱼ₊₄ are extracted from Q(f) under the condition that j=0, the centre data value is extracted and it is then stored at position fⱼ₊₂ in another buffer region Q′(f). Unity is added to the value of j and the similar processing is repeated until j+4 reaches jₘₐₓ. This processing corresponds to median filter processing as explained with reference to Fig. 5 and thus a difference spectrum after such filtering is in the buffer region Q′(f).

Since a capacity sufficient to hold values fⱼ₊₂ to fⱼₘₐₓ₋₂ is all that is required for buffer region Q′(f), the data capacity of region Q′(f) can be four values less than that of buffer region Q(f).

When median processing is completed for depth z′, namely when j+4 becomes jₘₐₓ, the content of Q′ is accumulated to (added to) the content of QQ (of course for each frequency). Accumulation of data relating to R sampling points (domains) can be obtained in QQ by repeated accumulation of k data for k depths z′ (z to z+k-1). A difference spectrum y$\frac{\text{^}}{\text{z}}$ space averaged with respect to depth z can be obtained by dividing such QQ with k.

A slope can be obtained by linear operations for y$\frac{\text{^}}{\text{z}}$, distortion compensated as required, and a value of β_{z} can be obtained from such slope. Since the processing involved in linear application (fitting) is known, explanation is omitted here.

Next, z is increased by +(k-1), QQ is cleared to zero and similar processing is repeated from the beginning. Thereby, data relating to depths z = 0, k-1, 2k-1, 3k-1, ... can be obtained sequentially. Here, z is caused to advance in steps k because it is necessary to provide independence between k averages when obtaining average values of k data. If there is a margin available in the processing time of the computer, it is also possible to obtain average values between partly overlapping k data by causing z to advance in steps of k/2 or k/3. In this case, the display of an image becomes very smooth. However, in any case, space resolution is certainly reduced to l/k.

In the above explanation, an average value is obtained from k samples of the data taken along the same z axis. Actually, however, it is recommended that k/r samples are obtained for each of r adjacent scanning lines and then the average value of such k values obtained. Processings in the steps 30 to 35 in Fig. 1 are similar to those explained above and are not further explained here.

In an embodiment of the present invention, as explained above, nonlinear filter processing is executed in relation to a log power spectrum. This processing is not, however, intended simply for smoothing the spectrum waveform. A sufficient improvement in the accuracy of measurement of β cannot be obtained simply by smoothing, as is clear if a linear filtering process, for example, a low-pass-filter process, etc., is used.

From another point of view, nonlinear filtering maintains an original waveform under certain conditions and rejects the original waveform outside those certain conditions. It is clear from the results of simulation that improvement in accuracy of measurement of β can be realized with such nonlinear filtering. The reason for the improvement in accuracy is not clear, but the inventors presently suspect that an area of spectrum in which extreme changes are manifest does not correctly reflect the properties of the measurement medium and nonlinear filter processing which suppresses such areas can improve overall S/N ratio. It is suspected that in operation of a least mean square error method in application to a model spectrum, a peak area of the spectrum exerts a great effect on a total sum of least mean square errors, and fluctuation can be reduced by eliminating such an area.

The inventors have carried out computer simulations in order to make clear the effects of the use of an embodiment of the present invention.

In a simulation, a first reflector train is formed offering random reflection coefficients at random intervals utilizing a random number sequence. It is assumed that attenuation slope β is set, for example, to 1 dB/MHz/cm and ultrasound having a certain waveform is applied to such reflector train from one direction. Thus, reflected waveforms can be obtained from such reflector train and such waveforms combined in order to obtain a received echo signal. A value of β can be obtained from such echo signal in accordance with the methods exployed in apparatus embodying the present invention as explained above and it can be determined what errors the value has with regard to 1dB/MHz/cm. The method of steps 20 to 25 indicated in Fig. 1 is employed for obtaining the value of β.

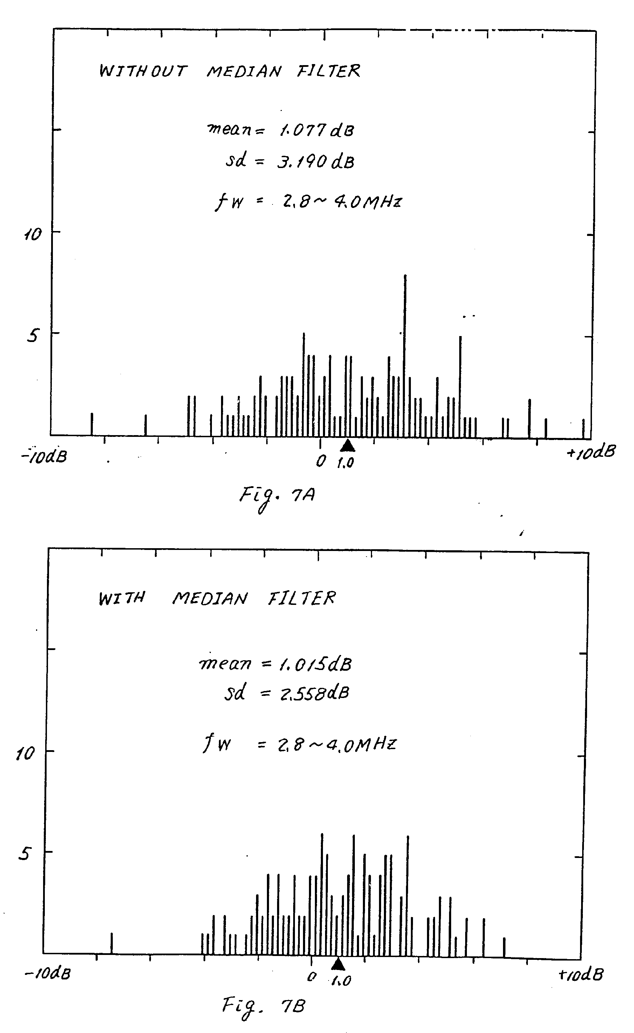

Such simulation was carried out for all of 128 different random reflector trains (for which β was 1 dB/MHz/cm) both in cases in which median filtering was effected and in cases in which it was not. Figs. 7A and 7B illustrate histograms of obtained as a result: in Fig. 7A median filtering is not effected whilst in Fig. 7B median filtering is effected.

The vertical axis in the histograms indicates a number of times a measured value of β appeared in the 128 trials, whilst the horizontal axis indicates measured values of β. A value indicated by "mean=" is an average of 128 measured values of β. Intrinsically, the value of β should be 1.00. A value indicated by "Sd=" is a standard deviated value which indicates the fluctuation of measured values. A smaller Sd value indicates a lesser fluctuation and thus indicates that accuracy can be maintained even when an average sample number is reduced. f_{w} is a bandwidth applied for the linear application operation.

Comparison between Figs. 7A and 7B shows that the mean value in Fig. 7B (where median filtering is effected) comes nearer to 1.0 and that fluctuation Sd is smaller.

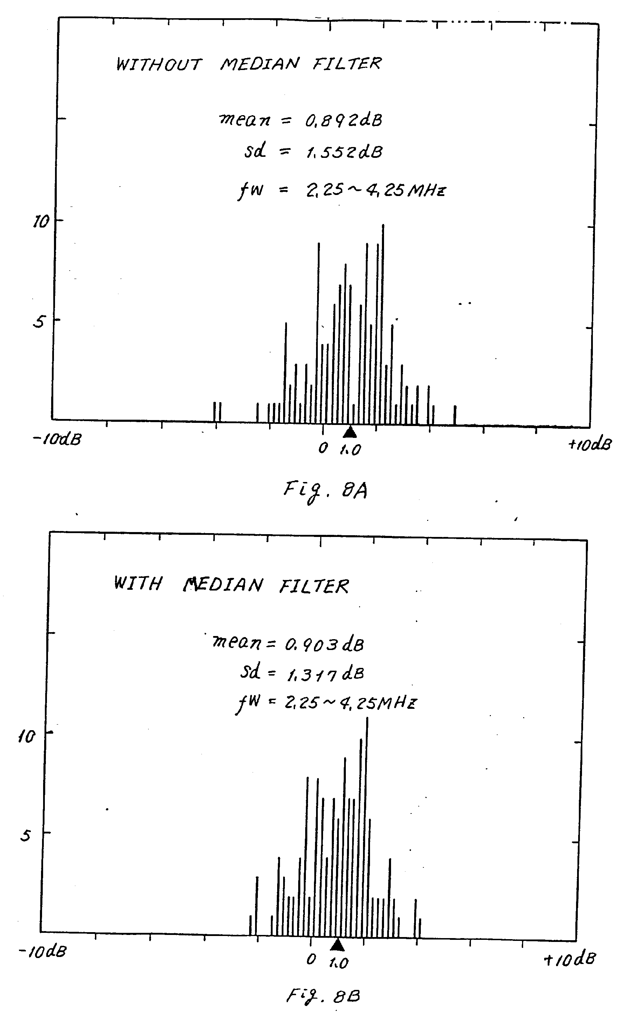

Figs. 8A and 8B are similar to 7A and 7B respectively but for Figs. 8A and 8B bandwidth f_{w} is widened and fluctuations S_{d} are considerably smaller than those of Figs 7A and 7B. As is the case for Fig. 7B, the mean is nearer to 1.0 and fluctuation Sd is smaller for Fig. 8B where median filtering is effected.

As explained above, fluctuation Sd is reduced by about 20% by the employment of an embodiment of the present invention (for a similar quantity of samples). If a fluctuation similar to that offered by previous proposals is allowed, the number of samples averaged can be reduced by about 40% and space resolution can be improved as much.

Nonlinear filtering other than median filtering can be employed in embodiments of the present invention, if the nonlinear filtering maintains the original waveform in areas where changes are gradual and suppresses only sharply changing regions of the original waveform.

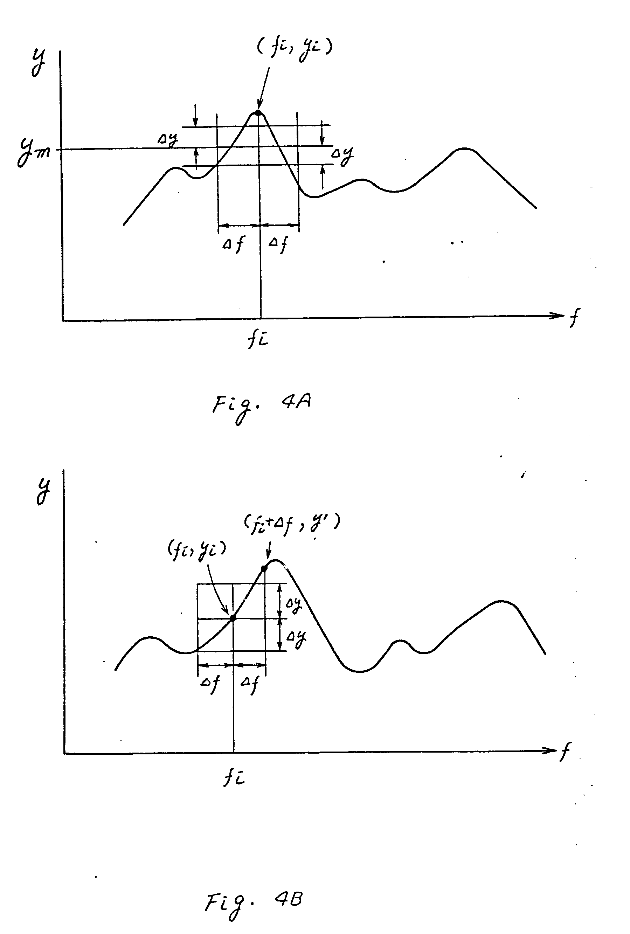

Fig. 4A illustrates a filtering process for eliminating excessively deviating data points. This filtering process takes a certain point (fᵢ, yᵢ), obtains an average yₘ of y in a range ± Δf around fi, and clips yᵢ to yₘ+ Δy when yᵢ is separated by specified deviation ± Δ y (or greater) from yₘ or does not use the point (fᵢ, yᵢ) for succeeding processings.

Fig. 4B illustrates a reverse hysteresis filtering process. This process takes a certain point (fᵢ, yᵢ) and clips the value y′ of a point (fᵢ + Δf, y′) separated by Δf from the certain point to y+Δy when y′ is larger than y+Δy or does not use such point (fᵢ+Δf, y′) for succeeding processings.

In addition, an embodiment of the present invention can employ a filtering process in which sample points exhibiting changes less than a threshold level (are used) and sample points which exhibit changes larger than those mentioned above are clipped to a value within the threshold level, or such sample values are eliminated from the object of succeeding processings.

An embodiment of the present invention relates to an apparatus for obtaining an acoustic characteristic of a medium, more specifically attenuation slope β, by sending ultrasound into the medium and analysing echo signals from the medium. A spectrum obtained from an echo signal includes random partial distortion, namely suffers superposition of the so-called scallop factor. Therefore a value β obtained from such spectrum suffers great fluctuation. In order to suppress such fluctuation, values of β are obtained for a plurality of adjacent points or domains which are estimated to have the same value of β and then a mean of the obtained values of β is obtained. However, such spatial averaging naturally reduces space resolution. An embodiment of the present invention provides for execution of a nonlinear filtering process, for example a median filtering process, in relation to a log power spectrum (obtained from an echo signal), applies a model spectrum to the result of the nonlinear filtering process and thereby facilitates measurement with suppression of fluctuation even when the number of spatially averaged samples is reduced, by obtaining a value of β from the model spectrum.

### LIST OF LITERATURE REFERENCES

[1] H. Miwa et al, "Removing Spectrum Scalloping and Frequency Dependent Reflection Factors in Ultrasonic Bio-tissue Characterization"; Proc. 1984 International Symp. on noise and clutter rejection in radars and imaging sensors; pages 158 to 163; Oct. 1984.
[2] U.S. Patent No. 4545250, H. Miwa.
[3] R. Kuc et al, "Estimating the Acoustic Attenuation Coefficient Slope for Liver from Reflected Ultrasound Signals"; IEEE, SU-26, No. 5; pages 353 to 362; Sept. 1979.
[4] R. Kuc, "Estimating Acoustic Attenuation from Reflected Ultrasound Signals; Comparison of Spectral Shift and Spectral-difference Approaches"; IEEE, ASSP-32, No. 1; pages 1 to 6; Feb. 1984.
[5] R. Kuc, "Bounds on Estimating the Acoustic Attenuation of Small Tissue Regions from Reflected Ultrasound"; IEEE; Proceedings to be published.
[6] M. Saito, "Measurement of Short-term Gaussian Spectrum"; Internal report No. 7; pages 1 to 13; Institute of Medical Electronics, Tokyo University; Mar. 1984.
[7] U.S. Patent No. 4509524, H. Miwa.
[8] H. Miwa et al, "Reduction from 3 Dimensions to 1 Dimension in Quantitative Measurement of Reflection using G-factor"; Jour. of Ultrasound in Medicine, vol. 3, No. 9; page 226; Sept. 1984.
[9] Japanese Laid-open Patent No. 60-227739, H. Miwa.
[10] D. J. H. Moore"On Non-linear Filters Involving and Transformation of the Time Variable"; D. J. Parker, IEEE, lT-19; pages 415 to 422; July 1973.
[11] P. P. Varoutas et al, "Two-dimensional E-filtering applied to Image Processing"; IEEE, SMC-6; pages 410 to 419; June 1976.

## Claims

1. An apparatus for measuring an ultrasonic characteristic (β, σ², σ) of a medium (2), comprising:-
means (1, 3, 4, 5, 6) operable to send ultrasonic pulses into the medium, to receive ultrasonic waves reflected from the medium and to provide signals representing the received reflected waves;
gate means (8) operable to extract those signals corresponding to reflected ultrasonic waves originating from a particular depth (z) in the medium;
means (9, 10, 11) operable to obtain a logarithmic power spectrum from the Fourier-transformed signal corresponding to the predetermined depth;
processing means (30) operable to process a logarithmic power spectrum;
modelling means (32) operable to fit a model spectrum curve, dependent upon selected parameters (p, q, r), to the output of the processing means (30) to obtain values of said parameters (p, q, r); and
extracting means (33, 34, 35) operable to extract a value of the ultrasonic characteristic (β, σ², σ) from said values (p, q, r) provided for two different depths (z1, z2) by the modelling means;
characterised in that:-
the processing in the processing means (30) consists exclusively of filtering the logarithmic power spectrum with a moving-window non-linear filtering process such that the original waveform of the logarithmic power spectrum subjected to the filtering process is maintained in areas where changes are gradual whilst changes are reduced, or are suppressed and not used for further evaluation, in areas of the original waveform where changes are sharp, the so filtered logarithmic power spectrum constituting the output of said processing means (30).

2. Apparatus for measuring an ultrasonic characteristic (β) of a medium (2), comprising:-
means (1, 3, 4, 5, 6) operable to send ultrasonic pulses into the medium, to receive ultrasonic waves reflected from the medium and to provide signals representing the received reflected waves;
gate means (8) operable to extract those signals corresponding to reflected ultrasonic waves originating from a particular depth (z) in the medium;
means (9, 10, 11) operable to obtain a logarithmic power spectrum from the Fourier-transformed signal corresponding to the predetermined depth;
means (20) operable to provide a difference between two so-obtained logarithmic power spectra of different depths (z1, z2), as a difference spectrum;
processing means (21) operable to process a so-obtained difference spectrum;
modelling means (23) operable to fit a model spectrum curve, dependent upon selected parameters (p, q), to the output of the processing means (21) to obtain values of said parameters (p, q); and
extracting means (24, 25) operable to extract a value of the ultrasonic characteristic (β) from said values (p, q) provided by the modelling means;
characterised in that:-
the processing in the processing means (21) consists exclusively of filtering the difference spectrum with a moving-window non-linear filtering process such that the original waveform of the difference spectrum, which is subjected to the filtering process, is maintained in areas where changes are gradual whilst changes are reduced, or are suppressed and not used for further evaluation, in areas of the original waveform where changes are sharp, the so filtered difference spectrum constituting the output of the processing means (21).

3. Apparatus as defined in the preamble of claim 1, characterised in that the processing means (30) comprise exclusively:-
means operable to provide a difference between the so obtained logarithmic power spectrum and a preliminarily fitted model curve;
filter means, whereby the filtering process consists exclusively of a moving-window non-linear filtering process such that the original waveform of the difference between the logarithmic power spectrum and the preliminarily fitted curve, which difference is subjected to the filtering process, is maintained in areas where changes are gradual whilst changes are reduced, or are suppressed and not used for further evaluation, in areas of the original waveform where changes are sharp; and
means for adding said difference to the preliminarily fitted curve, to provide a sum spectrum, which constitutes the output of the processing means (30).

4. Apparatus as defined in the preamble of claim 2, characterised in that the processing means (21) comprises exclusively:-
means operable to provide a difference between the so obtained difference spectrum and a preliminarily fitted model;
filter means, whereby the filtering process consists exclusively of a moving-window non-linear filtering process such that the original waveform of the difference between the difference spectrum and the preliminarily fitted curve, which difference is subjected to the filtering process, is maintained in areas where changes are gradual whilst changes are reduced, or are suppressed and not used for further evaluation, in areas of the original waveform where changes are sharp; and
means for adding said difference to the preliminarily fitted curve, to provide a sum spectrum, which constitutes the output of the processing means (21).

5. Apparatus as claimed in claim 1, wherein a parabola is employed as the model spectrum curve.

6. Apparatus as claimed in claim 2 or 4, wherein a straight line is employed as the model spectrum curve.

7. Apparatus as claimed in claim 3, wherein a parabola is employed as the model spectrum curve.

8. Apparatus as claimed in any preceding claim, wherein the characteristic is attenuation slope (β), being a constant of proportionality to frequency in an ultrasonic attenuation coefficient (α) of the medium.

9. Appparatus as claimed in any preceding claim, wherein spatial averaging means (31) are provided at any position, for example between the processing means (21) and the modelling means (23) in which case the modelling means (23) are operable to fit a model spectrum curve to the output of the spatial averaging means (31) and not to the output of the processing means as defined in the preceding claims.

10. Apparatus as claimed in any preceding claim, wherein the non-linear filtering process is a median filtering process.

## Patentansprüche

1. Vorrichtung zur Messung einer Ultraschallcharakteristik (β, σ², σ) eines Mediums (2), mit:
einer Einrichtung (1, 3, 4, 5, 6), die betreibbar ist, um Ultraschallimpulse in das Medium zu senden, vom Medium reflektierte Ultraschallwellen zu empfangen und die empfangenen reflektierten Wellen repräsentierende Signale vorzusehen;
einer Gatter-Einrichtung (8), die betreibbar ist, um jene Signale, welche reflektierten Ultraschallwellen entsprechen, die ihren Ursprung in einer bestimmten Tiefe (z) im Medium haben, zu extrahieren;
einer Einrichtung (9, 10, 11), die betreibbar ist, um ein logarithmisches Leistungsspektrum vom Fourier-transformierten Signal, das der vorherbestimmten Tiefe entspricht, zu erhalten;
einer Verarbeitungseinrichtung (30), die betreibbar ist, um ein logarithmisches Leistungsspektrum zu verarbeiten;
einer Modellierungseinrichtung (32), die betreibbar ist, um eine Modellspektralkurve, abhängig von ausgewählten Parametern (p, q, r), an den Ausgang der Verarbeitungseinrichtung (30) anzupassen, um Werte der genannten Parameter (p, q, r) zu erhalten; und
einer Extraktionseinrichtung (33, 34, 35), die betreibbar ist, um einen Wert der Ultraschallcharakteristik (β, σ², σ) aus den genannten Werten (p, q, r), die für zwei unterschiedliche Tiefen (z₁, z₂) von der Modellierungseinrichtung vorgesehen werden, zu extrahieren;
dadurch gekennzeichnet, daß:
die Verarbeitung in der Verarbeitungseinrichtung (30) ausschließlich aus dem Filtern des logarithmischen Leistungsspektrums mit einem nicht-linearen Filterprozeß mit einem bewegbaren Fenster derart besteht, daß die ursprüngliche Wellenform des logarithmischen Leistungsspektrums, das dem Filterprozeß unterworfen wird, in Bereichen aufrechterhalten wird, wo Änderungen allmählich sind, wohingegen Änderungen in Bereichen der ursprünglichen Wellenform, wo Änderungen scharf sind, reduziert oder unterdrückt und für eine weitere Auswertung nicht verwendet werden, wobei das so gefilterte logarithmische Leistungsspektrum den Ausgang der genannten Verarbeitungseinrichtung (30) bildet.

2. Vorrichtung zum Messen einer Ultraschallcharakteristik (β) eines Mediums (2), mit:
einer Einrichtung (1, 3, 4, 5, 6), die betreibbar ist, um Ultraschallimpulse in das Medium zu senden, vom Medium reflektierte Ultraschallwellen zu empfangen und die empfangenen reflektierten Wellen repräsentierende Signale vorzusehen;
einer Gatter-Einrichtung (8), die betreibbar ist, um jene Signale, welche reflektierten Ultraschallwellen entsprechen, die ihren Ursprung in einer bestimmten Tiefe (z) im Medium haben, zu extrahieren;
einer Einrichtung (9, 10, 11), die betreibbar ist, um ein logarithmisches Leistungsspektrum vom Fourier-transformierten Signal, das der vorherbestimmten Tiefe entspricht, zu erhalten;
einer Einrichtung (20), die betreibbar ist, um eine Differenz zwischen den beiden so erhaltenen logarithmischen Leistungsspektren der unterschiedlichen Tiefen (z₁, z₂) als ein Differenzspektrum vorzusehen;
einer Verarbeitungseinrichtung (21), die betreibbar ist, um ein so erhaltenes Differenzspektrum zu verarbeiten;
einer Modellierungseinrichtung (23), die betreibbar ist, um eine Modellspektralkurve, abhängig von ausgewählten Parametern (p, q), an den Ausgang der Verarbeitungseinrichtung (21) anzupassen, um Werte der genannten Parameter (p, q) zu erhalten; und
einer Extraktionseinrichtung (24, 25), die betreibbar ist, um einen Wert der Ultraschallcharakteristik (β) aus den genannten Werten (p, q), die von der Modellierungseinrichtung vorgesehen werden, zu extrahieren;
dadurch gekennzeichnet, daß:
die Verarbeitung in der Verarbeitungseinrichtung (21) ausschließlich aus dem Filtern des Differenzspektrums mit einem nicht-linearen Filterprozeß mit einem bewegbaren Fenster derart besteht, daß die ursprüngliche Wellenform des Differenzspektrums, das dem Filterprozeß unterworfen wird, in Bereichen aufrechterhalten wird, wo Änderungen allmählich sind, wohingegen Änderungen in Bereichen der ursprünglichen Wellenform, wo Änderungen scharf sind, reduziert oder unterdrückt und für eine weitere Auswertung nicht verwendet werden, wobei das so gefilterte Differenzspektrum den Ausgang der Verarbeitungseinrichtung (21) bildet.

3. Vorrichtung, wie im Oberbegriff von Anspruch 1 definiert, dadurch gekennzeichnet, daß die Verarbeitungseinrichtung (30) ausschließlich umfaßt:
eine Einrichtung, die betreibbar ist, um eine Differenz zwischen dem so erhaltenen logarithmischen Leistungsspektrum und einer vorläufig angepaßten Modellkurve vorzusehen;
eine Filtereinrichtung, wodurch der Filterprozeß ausschließlich aus einem nicht-linearen Filterprozeß mit einem bewegbaren Fenster derart besteht, daß die ursprüngliche Wellenform der Differenz zwischen dem logarithmischen Leistungsspektrum und der vorläufig angepaßten Kurve, welche Differenz dem Filterprozeß unterworfen wird, in Bereichen aufrechterhalten wird, wo Änderungen allmählich sind, wohingegen Änderungen in Bereichen der ursprünglichen Wellenform, wo Änderungen scharf sind, reduziert oder unterdrückt und für eine weitere Auswertung nicht verwendet werden; und
eine Einrichtung zum Addieren der genannten Differenz zur vorläufig angepaßten Kurve, um ein Summenspektrum vorzusehen, das den Ausgang der Verarbeitungseinrichtung (30) bildet.

4. Vorrichtung, wie im Oberbegriff von Anspruch 2 definiert, dadurch gekennzeichnet, daß die Verarbeitungseinrichtung (21) ausschließlich umfaßt:
eine Einrichtung, die betreibbar ist, um eine Differenz zwischen dem so erhaltenen Differenzspektrum und einem vorläufig angepaßten Modell vorzusehen;
eine Filtereinrichtung, wodurch der Filterprozeß ausschließlich aus einem nicht-linearen Filterprozeß mit einem bewegbaren Fenster derart besteht, daß die ursprüngliche Wellenform der Differenz zwischen dem Differenzspektrum und der vorläufig angepaßten Kurve, welche Differenz dem Filterprozeß unterworfen wird, in Bereichen aufrechterhalten wird, wo Änderungen allmählich sind, wohingegen Änderungen in Bereichen der ursprünglichen Wellenform, wo Änderungen scharf sind, reduziert oder unterdrückt und für eine weitere Auswertung nicht verwendet werden; und
eine Einrichtung zum Addieren der genannten Differenz zur vorläufig angepaßten Kurve, um ein Summenspektrum vorzusehen, das den Ausgang der Verarbeitungseinrichtung (21) bildet.

5. Vorrichtung nach Anspruch 1, bei welcher eine Parabel als Modellspektralkurve verwendet wird.

6. Vorrichtung nach Anspruch 2 oder 4, bei welcher eine gerade Linie als Modellspektralkurve verwendet wird.

7. Vorrichtung nach Anspruch 3, bei welcher eine Parabel als Modellspektralkurve verwendet wird.

8. Vorrichtung nach einem der vorhergehenden Ansprüche, bei welcher die Charakteristik die Dämpfungssteilheit (β) ist, die eine Proportionalitätskonstante zur Frequenz in einem Ultraschall-Dämpfungskoeffizienten (α) des Mediums ist.

9. Vorrichtung nach einem der vorhergehenden Ansprüche, bei welcher räumliche Mittelwertbildungseinrichtungen (31) in beliebiger Position, beispielsweise zwischen der Verarbeitungseinrichtung (21) und der Modellierungseinrichtung (23), vorgesehen sind, in welchem Fall die Modellierungseinrichtung (23) betreibbar ist, um eine Modellspektralkurve an den Ausgang der räumlichen Mittelwertbildungseinrichtungen (31) und nicht an den Ausgang der Verarbeitungseinrichtung, wie in den vorhergehenden Ansprüchen definiert, anzupassen.

10. Vorrichtung nach einem der vorhergehenden Ansprüche, bei welcher der nicht-lineare Filterprozeß ein Mittelwertfilterprozeß ist.

## Revendications

1. Appareil pour mesurer une caractéristique ultrasonore (β, σ², σ) d'un milieu (2), comprenant :
un moyen (1, 3, 4, 5, 6) servant à envoyer des impulsions ultrasonores dans le milieu, à recevoir des ondes ultrasonores réfléchies à partir du milieu et à fournir des signaux représentant les ondes réfléchies reçues ;
un moyen de sélection (8) servant à extraire ceux des signaux qui correspondent aux ondes ultrasonores réfléchies ayant pour origine une profondeur particulière (z) dans le milieu ;
un moyen (9, 10, 11) servant à obtenir un spectre d'énergie logarithmique à partir du signal correspondant à la profondeur prédéterminée transformé par transformation de Fourier ;
un moyen de traitement (30) servant à traiter un spectre d'énergie logarithmique ;
un moyen de modélisation (32) servant à ajuster une courbe de spectre modèle, fonction de paramètres sélectionnés (p, q, r), à la sortie du moyen de traitement (30) pour obtenir des valeurs desdits paramètres (p, q, r) ; et
un moyen d'extraction (33, 34, 35) servant à extraire une valeur de la caractéristique ultrasonore (β, σ², σ) desdites valeurs (p, q, r) fournies pour deux profondeurs (z1, z2) différentes par le moyen de modélisation ;
caractérisé en ce que :
le traitement dans le moyen de traitement (30) consiste exclusivement à filtrer le spectre d'énergie logarithmique à l'aide d'un traitement de filtrage non linéaire à fenêtre mobile tel que la forme d'onde d'origine du spectre d'énergie logarithmique soumis au traitement de filtrage est conservée dans les zones où les variations sont graduelles, tandis que, dans les zones de la forme d'onde d'origine où les variations sont nettes, les variations sont réduites, ou sont supprimées et ne sont pas utilisées pour évaluation ultérieure, le spectre d'énergie logarithmique ainsi filtré constituant la sortie dudit moyen de traitement (30).

2. Appareil pour mesurer une caractéristique ultrasonore (β) d'un milieu (2), comprenant :
un moyen (1, 3, 4, 5, 6) servant à envoyer des impulsions ultrasonores dans le milieu, à recevoir des ondes ultrasonores réfléchies à partir du milieu et à fournir des signaux représentant les ondes réfléchies reçues ;
un moyen de sélection (8) servant à extraire ceux des signaux qui correspondent aux ondes ultrasonores réfléchies ayant pour origine une profondeur particulière (z) dans le milieu ;
un moyen (9, 10, 11) servant à obtenir un spectre d'énergie logarithmique à partir du signal correspondant à la profondeur prédéterminée transformé par transformation de Fourier ;
un moyen (20) servant à fournir la différence entre deux spectres d'énergie logarithmiques ainsi obtenus de profondeurs (z1, z2) différentes, sous forme d'un spectre différence ;
un moyen de traitement (21) servant à traiter le spectre différence ainsi obtenu ;
un moyen de modélisation (23) servant à ajuster une courbe de spectre modèle, fonction de paramètres (p, q) sélectionnés, à la sortie du moyen de traitement (21) pour obtenir des valeurs desdits paramètres (p, q) ; et
un moyen d'extraction (24, 25) servant à extraire une valeur de la caractéristique ultrasonore (β) desdites valeurs (p, q) fournies par le moyen de modélisation ;
caractérisé en ce que :
le traitement dans le moyen de traitement (21) consiste exclusivement à filtrer le spectre différence à l'aide d'un traitement de filtrage non linéaire à fenêtre mobile tel que la forme d'onde d'origine du spectre différence, qui est soumis au traitement de filtrage, est conservée dans les zones où les variations sont graduelles, tandis que, dans les zones de la forme d'onde d'origine où les variations sont nettes, les variations sont réduites, ou sont supprimées et ne sont pas utilisées pour évaluation ultérieure, le spectre différence ainsi filtré constituant la sortie dudit moyen de traitement (21).

3. Appareil selon le préambule de la revendication 1, caractérisé en ce que le moyen de traitement (30) comprend exclusivement :
un moyen servant à fournir une différence entre le spectre d'énergie logarithmique ainsi obtenu et une courbe modèle ajustée de façon préliminaire ;
un moyen de filtrage, par lequel le traitement de filtrage est constitué exclusivement d'un traitement de filtrage non linéaire à fenêtre mobile tel que la forme d'onde d'origine de la différence entre le spectre d'énergie logarithmique et la courbe ajustée de façon préliminaire, laquelle différence est soumise au traitement de filtrage, est conservée dans les zones où les variations sont graduelles, tandis que, dans les zones de la forme d'onde d'origine où les variations sont nettes, les variations sont réduites, ou sont supprimées et ne sont pas utilisées pour évaluation ultérieure ; et,
un moyen d'addition pour additionner ladite différence à la courbe ajustée de façon préliminaire, pour donner un spectre somme, qui constitue la sortie du moyen de traitement.

4. Appareil selon le préambule de la revendication 2, caractérisé en ce que le moyen de traitement (21) comprend exclusivement :
un moyen servant à fournir une différence entre le spectre différence ainsi obtenu et une courbe modèle ajustée de façon préliminaire ;
un moyen de filtrage, par lequel le traitement de filtrage est constitué exclusivement d'un traitement de filtrage non linéaire à fenêtre mobile tel que la forme d'onde d'origine de la différence entre le spectre différence et la courbe ajustée de façon préliminaire, laquelle différence est soumise au traitement de filtrage, est conservée dans les zones où les variations sont graduelles, tandis que, dans les zones de la forme d'onde d'origine où les variations sont nettes, les variations sont réduites, ou sont supprimées et ne sont pas utilisées pour évaluation ultérieure ; et,
un moyen d'addition pour additionner ladite différence à la courbe ajustée de façon préliminaire, pour donner un spectre somme, qui constitue la sortie du moyen de traitement.

5. Appareil selon la revendication 1, dans lequel une parabole est utilisée comme courbe de spectre modèle.

6. Appareil selon la revendication 2 ou 4, dans lequel une ligne droite est utilisée comme courbe de spectre modèle.

7. Appareil selon la revendication 3, dans lequel une parabole est utilisée comme courbe de spectre modèle.

8. Appareil selon l'une quelconque des revendications précédentes, dans lequel la caractéristique est une pente d'atténuation (β), qui est une constante de proportionnalité à la fréquence dans un coefficient d'atténuation d'ultrasons (α) du milieu.

9. Appareil selon l'une quelconque des revendications précédentes, dans lequel le moyen de calcul de la moyenne spatiale (31) est disposé dans une position quelconque, par exemple, entre le moyen de traitement (21) et le moyen de modélisation (23), auquel cas le moyen de modélisation (23) sert à ajuster une courbe de spectre modèle à la sortie du moyen de calcul de la moyenne spatiale (31) et non à la sortie du moyen de traitement tel que défini dans les revendications précédentes.

10. Appareil selon l'une quelconque des revendications précédentes, dans lequel le traitement par filtrage non linéaire est un traitement par filtrage médian.
